# EUROPÄISCHE PATENTSCHRIFT

(11) **EP 3 770 386 B1**
(45) Veröffentlichungstag und Bekanntmachung des Hinweises auf die Patenterteilung: **18.01.2023**
(21) Anmeldenummer: 20183769.7
(22) Anmeldetag: 02.07.2020
(51) Int. Cl.: F01N 3/025, F01N 3/029, F01N 3/10, F01N 3/20, F01N 3/22, F01N 3/30, F01N 3/36, F01N 9/00, F01N 13/00

(54) **ABGASNACHBEHANDLUNGSSYSTEM UND VERFAHREN ZUR ABGASNACHBEHANDLUNG EINES VERBRENNUNGSMOTORS**
EXHAUST GAS AFTERTREATMENT SYSTEM AND METHOD FOR EXHAUST GAS AFTERTREATMENT OF AN INTERNAL COMBUSTION ENGINE
SYSTÈME DE POST-TRAITEMENT DES GAZ D'ÉCHAPPEMENT ET PROCÉDÉ DE POST-TRAITEMENT DES GAZ D'ÉCHAPPEMENT D'UN MOTEUR À COMBUSTION INTERNE

(30) Priorität: 26.07.2019 DE 102019211114
(43) Veröffentlichungstag der Anmeldung: 27.01.2021
(73) Patentinhaber: VOLKSWAGEN AG, 38440 Wolfsburg (DE)
(72) Erfinder: Kaack, Michael, 38531 Rötgesbüttel (DE); Paukner, Stefan, 38442 Wolfsburg (DE); Baron von Ceumern-Lindenstjerna, Falk-Christian, 38124 Braunschweig (DE)

(56) Entgegenhaltungen:
- DE-A1-102012 021 573
- DE-A1-102016 206 394
- DE-A1-102016 208 289
- US-A1- 2011 219 752
- US-B1- 6 634 169

## Beschreibung

Die Erfindung betrifft ein Abgasnachbehandlungssystem sowie ein Verfahren zur Abgasnachbehandlung eines Verbrennungsmotors mit einem solchen Abgasnachbehandlungssystem gemäß dem Oberbegriff der unabhängigen Patentansprüche.

Die kontinuierliche Verschärfung der Abgasgesetzgebung stellt hohe Anforderungen an die Fahrzeughersteller, welche durch entsprechende Maßnahmen zur Reduktion der motorischen Rohemissionen und durch eine entsprechende Abgasnachbehandlung gelöst werden. Mit Einführung der Gesetzgebungsstufe EU6 wird für Ottomotoren ein Grenzwert für eine Partikelanzahl vorgeschrieben, der in vielen Fällen den Einsatz eines Ottopartikelfilters notwendig macht. Solche Rußpartikel entstehen besonders nach einem Kaltstart des Verbrennungsmotors aufgrund einer unvollständigen Verbrennung in Kombination mit einem unterstöchiometrischen Verbrennungsluftverhältnis sowie kalter Zylinderwände während des Kaltstarts. Die Kaltstartphase ist somit maßgeblich für die Einhaltung der gesetzlich vorgeschriebenen Partikelgrenzwerte. Im Fahrbetrieb wird ein solcher Ottopartikelfilter weiter mit Ruß beladen. Damit der Abgasgegendruck nicht zu stark ansteigt, muss dieser Ottopartikelfilter kontinuierlich oder periodisch regeneriert werden. Der Anstieg des Abgasgegendrucks kann zu einem Mehrverbrauch des Verbrennungsmotors, Leistungsverlust und einer Beeinträchtigung der Laufruhe bis hin zu Zündaussetzern führen. Um eine thermische Oxidation des im Ottopartikelfilter zurückgehaltenen Rußes mit Sauerstoff durchzuführen, ist ein hinreichend hohes Temperaturniveau in Verbindung mit gleichzeitig vorhandenem Sauerstoff in der Abgasanlage des Ottomotors notwendig. Da moderne Ottomotoren normalerweise ohne Sauerstoffüberschuss mit einem stöchiometrischen Verbrennungsluftverhältnis (λ=1) betrieben werden, sind dazu zusätzliche Maßnahmen erforderlich. Dazu kommen als Maßnahmen beispielsweise eine Temperaturerhöhung durch eine Zündwinkelverstellung, eine zeitweise Magerverstellung des Ottomotors, das Einblasen von Sekundärluft in die Abgasanlage oder eine Kombination dieser Maßnahmen infrage. Bevorzugt wird bislang eine Zündwinkelverstellung in Richtung spät in Kombination mit einer Magerverstellung des Ottomotors angewandt, da dieses Verfahren ohne zusätzliche Bauteile auskommt und in den meisten Betriebspunkten des Ottomotors eine ausreichende Sauerstoffmenge liefern kann.

Aufgrund der guten Wirkungsgrade beim Ottomotor ist eine Regeneration eines Partikelfilters in Unterbodenposition in bestimmten Betriebssituationen unmöglich, sodass die Regeneration eines Partikelfilters in Unterbodenlage spezieller Fahrzyklen bedarf. Eine motornahe Positionierung des Partikelfilters ist günstig, da dadurch höhere Abgastemperaturen am Partikelfilter vorliegen und das Aufheizen auf eine Regenerationstemperatur erleichtert wird.

Im Rahmen einer weiteren Verschärfung der Abgasgesetzgebung müssen Kraftfahrzeuge zukünftig unter realen Betriebsbedingungen (Real-Drive-Emissions) Abgasgrenzwerte einhalten. In bekannten Abgasnachbehandlungssystemen werden die Katalysatoren möglichst motornah angeordnet, um ein schnelles Aufheizen nach einem Kaltstart des Verbrennungsmotors zu ermöglichen. Die motornahe Position führt jedoch im Hochlastbetrieb zu einer beschleunigten Alterung der katalytisch wirksamen Oberfläche der Katalysatoren. Daher werden katalytisch beschichtete Ottopartikelfilter, welche auch als Vier-Wege-Katalysatoren bezeichnet werden, in einer Unterbodenposition eines Kraftfahrzeuges angeordnet, um die thermische Belastung für einen solchen Vier-Wege-Katalysator zu reduzieren.

Aus der DE 10 2015 212 846 A1 ist ein Abgasnachbehandlungssystem für einen Verbrennungsmotor mit einem motornahen Drei-Wege-Katalysator, einem NOx-Speicherkatalysator sowie mit einem in Unterbodenposition eines Kraftfahrzeuges angeordneten Partikelfilter bekannt. Dabei wird zur Entschwefelung des NOx-Speicherkatalysators und zur gleichzeitigen Regeneration des Partikelfilters mehrfach zwischen einem unterstöchiometrischen Verbrennungsluftverhältnis und einem überstöchiometrischen Verbrennungsluftverhältnis alternierend umgeschaltet, bis der NOx-Speicherkatalysator entschwefelt und der Partikelfilter vollständig regeneriert ist.

Die DE 10 2017 201 742 A1 offenbart ein Verfahren zum Aufheizen und Regenerieren eines im Abgasstrom eines Ottomotors stromabwärts eines Katalysators angeordneten Partikelfilters mit einer Vorrichtung zur Zufuhr von Sekundärluft zum Abgasstrom zwischen dem Katalysator und dem Partikelfilter. Das Verfahren zeichnet sich dadurch aus, dass Querempfindlichkeiten einer zwischen dem Katalysator und dem Partikelfilter angeordneten Lambdasonde für andere Abgasbestandteile als Sauerstoff kompensiert werden.

Darüber hinaus ist aus der EP 1 582 709 A2 ein Verfahren zum Regenerieren eines in einem Abgasstrang eines selbstzündenden Verbrennungsmotors angeordneten Partikelfilters, insbesondere in einem Kraftfahrzeug, bekannt. Dabei sind in einer Abgasanlage des selbstzündenden Verbrennungsmotors ein Oxidationskatalysator und stromabwärts des Oxidationskatalysators ein Partikelfilter angeordnet, wobei zum Aufheizen des Partikelfilters Kraftstoff in die Abgasanlage stromaufwärts des Oxidationskatalysators eindosiert werden kann und auf der katalytisch wirksamen Oberfläche des Oxidationskatalysators zusammen mit dem Restsauerstoff im Abgasstrom exotherm umgesetzt wird, wodurch der Partikelfilter aufgeheizt wird.

Die DE 10 2016 206 394 A1 offenbart einen Verbrennungsmotor mit einer zweiflutigen Abgasanlage, wobei in jeder Abgasflut ein motornaher erster Drei-Wege-Katalysator und stromabwärts des motornahen Drei-Wege-Katalysators ein weiterer Katalysator angeordnet ist. Die D1 offenbart ferner einen Abgasbrenner, mit welchem beide Abgasfluten stromabwärts des motornahen ersten Katalysators und stromaufwärts des weiteren Katalysators beheizbar sind.

Aus der DE 10 2012 021 573 A1 ist ein Verfahren zur Steuerung oder Regelung eines mit Luft und Kraftstoff betriebenen Brenners bekannt, dessen Brennerabgas mit einem verbrennungsmotorischen Abgas einer fremdgezündeten Brennkraftmaschine zusammengeführt und ein so erhaltenes Mischabgas einem eine drei-wege-katalytische Funktion aufweisenden Abgaskatalysator zugeführt wird.

Die US 2011 / 0 219 752 A1 offenbart ein Regenerationssystem mit einem Partikelfilter. Der Partikelfilter hat ein stromaufwärts gelegenes Ende, das ein Abgas von einem Verbrennungsmotor erhält. Ein Luftpumpenkreislauf leitet die Umgebungsluft zu einer ersten Abgasleitung stromaufwärts vom Partikelfilter. Ein Steuermodul ermittelt einen aktuellen Rußbeladungsgrad des Partikelfilters. Das Steuermodul betreibt den Verbrennungsmotor mit einem unterstöchiometrischen Verbrennungsluftverhältnis und aktiviert eine Luftpumpe des Luftpumpenkreislaufs, wenn der aktuelle Rußbeladungsgrad größer ist als ein vorgegebener Rußbeladungsgrad.

Aus der US 6 634 169 B1 ist ein Verfahren zur Entschwefelung eines Drei-Wege-Katalysators in Unterbodenlage eines Kraftfahrzeuges bekannt. Zur Entschwefelung wird die Abgastemperatur erhöht, in dem sowohl Sekundärluft als auch Kraftstoff stromaufwärts des Drei-Wege-Katalysators in die Abgasanlage eingeleitet werden, wobei der Drei-Wege-Katalysator in Unterbodenlage durch eine exotherme Reaktion des Kraftstoffs mit der Sekundärluft erhitzt und dabei entschwefelt wird.

DE 10 2016 208 289 A1 beschreibt einen Verbrennungsmotor und ein Verfahren zum Betreiben eines Verbrennungsmotors. Der Verbrennungsmotor umfasst einen Frischgasstrang, eine Abgasanlage mit wenigstens einer ersten Abgasnachbehandlungsvorrichtung und wenigstens einer zweiten Abgasnachbehandlungsvorrichtung, welche stromab der ersten Abgasnachbehandlungsvorrichtung angeordnet ist. Des Weiteren umfasst der Verbrennungsmotor ein Sekundärluftsystem mit einer Sekundärluftpumpe, welche vom Frischgasstrang abzweigt, wobei die Sekundärluftleitung einen ersten Zweig aufweist, welcher stromauf der ersten Abgasnachbehandlungsvorrichtung in die Abgasanlage mündet, und einen zweiten Zweig aufweist, welcher stromab der ersten Abgasnachbehandlungsvorrichtung und stromauf des Partikelfilters in die Abgasanlage mündet. Über die Sekundärluftleitung kann Sekundärluft der ersten und/oder der zweiten Abgasnachbehandlungsvorrichtung zugeführt werden.

Der Erfindung liegt nun die Aufgabe zugrunde, bei einem stöchiometrisch betriebenen Ottomotor eine Regeneration eines Vier-Wege-Katalysators in Unterbodenlage zu erleichtern und insbesondere das Aufheizen des Vier-Wege-Katalysators zur Regeneration des Vier-Wege-Katalysators zu verbessern.

Erfindungsgemäß wird diese Aufgabe durch ein Abgasnachbehandlungssystem für einen Verbrennungsmotor gelöst. Das Abgasnachbehandlungssystem weist eine Abgasanlage auf, welche mit einem Auslass des Verbrennungsmotors verbindbar ist. In Strömungsrichtung eines Abgases des Verbrennungsmotors durch einen Abgaskanal der Abgasanlage sind ein motornaher Drei-Wege-Katalysator und stromabwärts des motornahen Drei-Wege-Katalysators ein zweiter Katalysator sowie eine Partikelminderungsvorrichtung angeordnet. Es ist vorgesehen, dass an dem Abgaskanal ein Kraftstoffinjektor angeordnet ist, mit welchem Kraftstoff stromabwärts des motornahen Drei-Wege-Katalysators und stromaufwärts des zweiten Katalysators eingespritzt werden kann. Die Abgasanlage umfasst ferner ein Sekundärluftsystem, mit welchem Sekundärluft stromabwärts des motornahen Drei-Wege-Katalysators und stromaufwärts des zweiten Katalysators in den Abgaskanal eingeblasen werden kann. Unter einem motornahen Drei-Wege-Katalysator ist in diesen Zusammenhang ein Drei-Wege-Katalysator zu verstehen, dessen Einlass eine Abgaslauflänge von weniger als 80 cm, vorzugsweise von weniger als 50 cm ab einem Auslass des Verbrennungsmotors aufweist. Durch ein erfindungsgemäßes Abgasnachbehandlungssystem können die Emissionen sowohl im Normalbetrieb des Verbrennungsmotors als auch in einer Heizphase beziehungsweise während der Regeneration der Partikelminderungsvorrichtung minimiert werden. Zudem ist ein Aufheizen der Partikelminderungsvorrichtung auf ihre Regenerationstemperatur auch bei einem Schwachlastbetrieb des Verbrennungsmotors möglich.

Durch die in den abhängigen Ansprüchen aufgeführten Merkmale sind vorteilhafte Verbesserungen und nicht-triviale Weiterentwicklungen des im unabhängigen Anspruch angegebenen Abgasnachbehandlungssystems möglich.

In bevorzugter Ausgestaltung der Erfindung ist vorgesehen, dass der zweite Katalysator und die Partikelminderungsvorrichtung in einem gemeinsamen Bauteil als Vier-Wege-Katalysator zusammengefasst sind. Durch einen Vier-Wege-Katalysator können sowohl die Partikelemissionen als auch die Emissionen an gasförmigen Schadstoffen minimiert werden. Dabei kann der Vier-Wege-Katalysator durch die Anordnung in einer Unterbodenposition eines Kraftfahrzeuges entsprechend groß ausgeführt werden, wodurch der Anstieg des Abgasgegendrucks begrenzt werden kann und hinreichend viel katalytisch wirksames Volumen bereitgestellt werden kann, um auch in einem Hochlastbetrieb die Schadstoffe im Abgasstrom des Verbrennungsmotors effizient zu konvertieren.

In weiterer bevorzugter Ausgestaltung der Erfindung ist vorgesehen, dass die Partikelminderungsvorrichtung als Ottopartikelfilter ausgeführt ist, welcher in Strömungsrichtung stromabwärts des zweiten Katalysators angeordnet ist. Durch die Aufteilung der emissionsmindernden Funktionalitäten auf einen Drei-Wege-Katalysator und einen Ottopartikelfilter kann die Dauerhaltbarkeit verbessert werden. Zudem kann die Konvertierungsleistung für gasförmige Schadstoffe erhöht werden.

Besonders bevorzugt ist dabei, wenn der Ottopartikelfilter als unbeschichteter Partikelfilter ausgeführt ist. Durch einen unbeschichteten Partikelfilter kann der Strömungswiderstand reduziert werden, wodurch die Regenerationsintervalle des Partikelfilters verlängert werden können.

In einer weiteren bevorzugten Ausführungsform des Abgasnachbehandlungssystems ist vorgesehen, dass der zweite Katalysator als zweiter Drei-Wege-Katalysator ausgeführt ist. Durch einen zweiten Drei-Wege-Katalysator kann die Konvertierungsleistung für gasförmige Emissionen bei gleicher Größe des Katalysators gegenüber einem Vier-Wege-Katalysator nochmals gesteigert werden.

In einer vorteilhaften Ausführungsform der Erfindung ist vorgesehen, dass der zweite Katalysator mindestens 75 cm vom motornahen Drei-Wege-Katalysator beabstandet ist. Dadurch kann die thermische Belastung für den zweiten Katalysator bei einem Hochlastbetrieb des Verbrennungsmotors reduziert werden, wodurch eine Alterung der katalytisch wirksamen Oberfläche des zweiten Katalysators, insbesondere der katalytisch wirksamen Oberfläche eines Vier-Wege-Katalysators, verlangsamt wird.

Erfindungsgemäß ist vorgesehen, dass der Kraftstoffinjektor stromaufwärts einer Einleitstelle des Sekundärluftsystems angeordnet ist. Dadurch steht eine möglichst lange Wegstrecke zur Verdunstung und Vermischung des eingespritzten Kraftstoffs mit dem Abgasstrom des Verbrennungsmotors zur Verfügung. Durch eine entsprechende Positionierung kann die Zerstäubung des Kraftstoffs durch das Sekundärluftsystem unterstützt werden, sodass der Kraftstoff schneller verdampft.

Erfindungsgemäß ist dabei vorgesehen, dass stromabwärts des Kraftstoffinjektors und stromabwärts einer Einleitstelle des Sekundärluftsystems und stromaufwärts des zweiten Katalysators eine Mischstrecke mit einer Länge von mindestens 50 cm ausgebildet ist. Dadurch kann eine hinreichende Vermischung des eingespritzten Kraftstoffs und der eingeblasenen Sekundärluft mit dem Abgasstrom vor Eintritt in den zweiten Katalysator sichergestellt werden.

In einer weiteren Verbesserung der Erfindung ist vorgesehen, dass in der Abgasanlage drei Lambdasonden angeordnet sind, wobei die erste Lambdasonde stromaufwärts des motornahen Drei-Wege-Katalysators angeordnet ist, wobei die zweite Lambdasonde stromabwärts des motornahen Drei-Wege-Katalysators und stromaufwärts des Kraftstoffinjektors sowie der Einleitstelle des Sekundärluftsystems angeordnet ist, und wobei die dritte Lambdasonde stromabwärts der Kraftstoffinjektors und stromabwärts der Einleitstelle des Sekundärluftsystems und stromaufwärts des zweiten Katalysators angeordnet ist.

Besonders bevorzugt ist dabei, wenn die erste Lambdasonde als Breitbandsonde und die zweite und dritte Lambdasonde als Sprungsonden ausgeführt sind. Dadurch ist eine besonders effiziente Regelung des Verbrennungsluftverhältnisses in den Brennräumen des Verbrennungsmotors möglich. Somit können die Rohemissionen des Verbrennungsmotors minimiert werden, wodurch die Belastung und eine damit verbundene Alterung der Abgasnachbehandlungskomponenten reduziert werden können.

Erfindungsgemäß wird ein Verfahren zur Abgasnachbehandlung eines Verbrennungsmotors mit einem solchen Abgasnachbehandlungssystem vorgeschlagen, welches folgende Schritte umfasst:
- Ermitteln einer Rußbeladung auf der Partikelminderungsvorrichtung,
- Aufheizen der Abgasanlage durch innermotorische Heizmaßnahmen, bis der zweite Katalysator seine Light-Off-Temperatur erreicht hat,
- gleichzeitiges Einspritzen von Kraftstoff durch den Kraftstoffinjektor und Einblasen von Sekundärluft in den Abgaskanal stromabwärts des motornahen Drei-Wege-Katalysators und stromaufwärts des zweiten Katalysators, wobei
- der eingespritzte Kraftstoff mit der Sekundärluft exotherm auf der katalytisch wirksamen Oberfläche des zweiten Katalysators umgesetzt wird, bis die Partikelminderungsvorrichtung ihre Regenerationstemperatur erreicht hat, und
- Oxidieren der in der Partikelminderungsvorrichtung zurückgehaltenen Rußpartikel, wobei der Sauerstoff zur Oxidation der Rußpartikel durch das Sekundärluftsystem bereitgestellt wird.

Durch ein erfindungsgemäßes Verfahren ist eine emissionsfreie Regeneration der Partikelminderungsvorrichtung möglich. Abhängig von der Dimensionierung des Sekundärluftsystems und des Kraftstoffinjektors ist eine große Heizleistung über das katalytische Beheizen des zweiten Katalysators darstellbar. Somit ist eine Regeneration der Partikelminderungsvorrichtung auch bei einem Einbau in einer Unterbodenposition eines Kraftfahrzeuges auch bei schwachlastigem Betriebszyklus des Verbrennungsmotors darstellbar.

In einer vorteilhaften Verbesserung des Verfahrens ist vorgesehen, dass der Verbrennungsmotor während der Durchführung des Verfahrens mit einem stöchiometrischen Verbrennungsluftverhältnis (λ = 1) betrieben wird. Durch den durchweg stöchiometrischen Motorbetrieb werden die gasförmigen Emissionen des Motors während der gesamten Regeneration auf dem motornahen Drei-Wege-Katalysator konvertiert. Durch den Verzicht auf eine Fettphase werden auf dem motornahen Drei-Wege-Katalysator während des Aufheizens und der Regeneration der Partikelminderungsvorrichtung keine Sekundäremissionen wie beispielsweise Ammoniak gebildet. Dadurch kann in allen Betriebszuständen des Verbrennungsmotors stets eine effiziente Konvertierung der Abgasemissionen sichergestellt und eine Regeneration der Partikelminderungsvorrichtung ohne einen Anstieg der Endrohremissionen durchgeführt werden.

Gemäß einer vorteilhaften Ausführungsform des Verfahrens ist vorgesehen, dass während einer Heizphase der Partikelminderungsvorrichtung stromabwärts des motornahen Drei-Wege-Katalysators ein stöchiometrisches oder leicht überstöchiometrisches Verbrennungsluftverhältnis über den Kraftstoffinjektor und das Sekundärluftsystem eingestellt wird. Dadurch kann verhindert werden, dass sich in der Heizphase oder während der Regeneration der Partikelminderungsvorrichtung Sekundäremissionen auf dem zweiten Katalysator bilden, welche nicht mehr durch eine nachgeschaltete Abgasnachbehandlungskomponente konvertiert werden können.

In einer vorteilhaften Ausführungsform des Verfahrens ist vorgesehen, dass während der Regeneration der Partikelminderungsvorrichtung weiterhin Kraftstoff in den Abgaskanal stromabwärts des motornahen Drei-Wege-Katalysators eingespritzt wird. Dadurch kann im Zusammenspiel mit der Sekundärlufteinblasung eine Regelung der Temperatur der Partikelminderungsvorrichtung erfolgen, sodass einerseits eine thermische Schädigung der Partikelminderungsvorrichtung verhindert wird und andererseits ein Abkühlen der Partikelminderungsvorrichtung unter ihre Regenerationstemperatur und somit ein Abbruch der Regenerationsreaktion unterbunden werden. Dadurch kann eine schnelle und vollständige Regeneration der Partikelminderungsvorrichtung sichergestellt werden.

In einer Ausführungsvariante des Verfahrens kann mit Vorteil vorgesehen sein, dass während der Heizphase der Partikelminderungsvorrichtung und/oder während der Regeneration der Partikelminderungsvorrichtung die innermotorischen Heizmaßnahmen aufrechterhalten bleiben. Durch innermotorische Heizmaßnahmen kann zusätzlich Wärme in die Abgasanlage eingebracht werden. Dies kann insbesondere bei einem Schwachlastbetrieb des Verbrennungsmotors hilfreich sein, um die zur Regeneration der Partikelminderungsvorrichtung notwendige Temperatur möglichst zeitnah zu erreichen und/oder zu halten.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Gleiche Bauteile oder Bauteile mit gleicher Funktion sind dabei mit den gleichen Bezugszeichen gekennzeichnet. Es zeigen:
- Figur 1: ein erstes Ausführungsbeispiel eines Verbrennungsmotors mit einem erfindungsgemäßen Abgasnachbehandlungssystem;
- Figur 2: ein alternatives Ausführungsbeispiel eines erfindungsgemäßen Abgasnachbehandlungssystems für einen Verbrennungsmotor;
- Figur 3: einen Verlauf des Verbrennungsluftverhältnisses im zeitlichen Verlauf während der Durchführung eines erfindungsgemäßen Verfahrens zur Abgasnachbehandlung des Verbrennungsmotors; und
- Figur 4: einen Temperaturverlauf der Partikelminderungsvorrichtung während der Durchführung eines erfindungsgemäßen Verfahrens zur Abgasnachbehandlung.

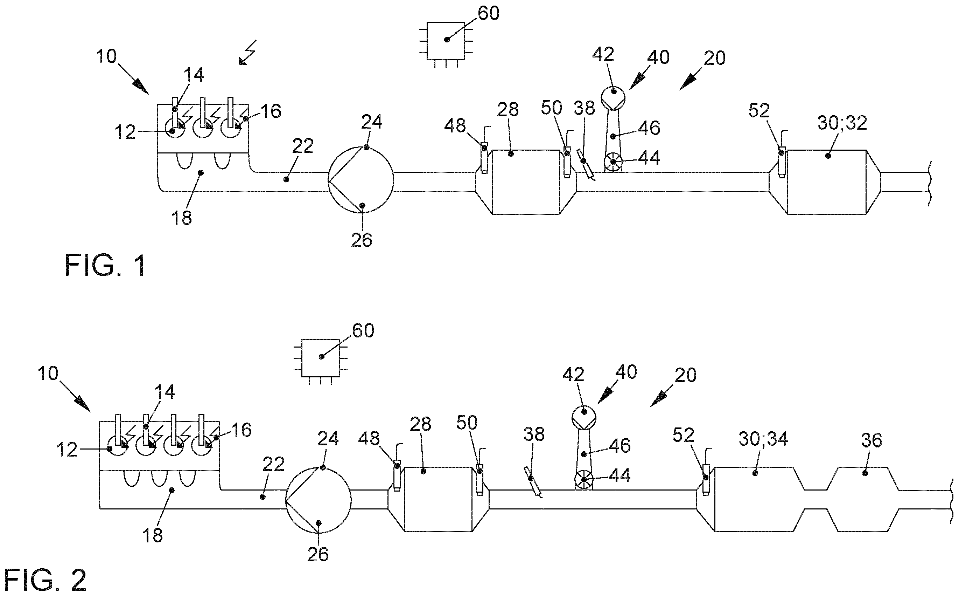

Figur 1 zeigt eine schematische Darstellung eines Verbrennungsmotors 10, dessen Auslass 18 mit einer Abgasanlage 20 eines erfindungsgemäßen Abgasnachbehandlungssystem zur Abgasnachbehandlung eines Abgasstroms des Verbrennungsmotors 10 verbunden ist. Der Verbrennungsmotor 10 ist als Ottomotor ausgeführt, welcher mittels externen Zündmitteln, insbesondere mittels Zündkerzen 16, fremdgezündet wird. Der Verbrennungsmotor 10 weist mehrere Brennräume 12 auf, in welchen ein Kraftstoff-Luft-Gemisch verbrannt wird. Dazu ist an den Brennräumen 12 jeweils ein Kraftstoffinjektor 14 vorgesehen, um einen Kraftstoff in die Brennräume 12 einzuspritzen. Der Verbrennungsmotor 10 ist vorzugsweise als mittels eines Abgasturboladers 24 aufgeladener Verbrennungsmotor 10 ausgeführt, wobei eine Turbine 26 des Abgasturboladers 24 stromabwärts des Auslasses 18 und stromaufwärts eines motornahen Drei-Wege-Katalysators 28 angeordnet ist. Die Abgasanlage 20 umfasst einen Abgaskanal 22, in dem in Strömungsrichtung eines Abgases durch den Abgaskanal 22 stromabwärts des motornahen Drei-Wege-Katalysators 28 in einer Unterbodenlage eines Kraftfahrzeuges ein zweiter Katalysator 30 angeordnet ist. Der zweite Katalysator 30 ist als Vier-Wege-Katalysator 32 ausgeführt und vereint eine drei-Wege-katalytische Funktion mit einer Partikelminderungsfunktion.

Stromabwärts des motornahen ersten Drei-Wege-Katalysators 28 und stromaufwärts des Vier-Wege-Katalysators 32 ist ein Kraftstoffinjektor 38 zur Einspritzung eines Kraftstoffs in den Abgaskanal 22 angeordnet. Ferner ist am Abgaskanal 22 stromabwärts des motornahen Drei-Wege-Katalysators 28 und stromaufwärts des Vier-Wege-Katalysators 32 eine Einleitstelle für ein Sekundärluftsystem 40 ausgebildet, an welcher Sekundärluft in den Abgaskanal 22 eingeblasen werden kann. Stromabwärts des Kraftstoffinjektors 38 und stromabwärts der Einleitstelle des Sekundärluftsystems 40 ist eine Mischstrecke ausgebildet, in welcher sich der über den Kraftstoffinjektor 38 eingebrachte Kraftstoff und die über das Sekundärluftsystem in den Abgaskanal 22 eingebrachte Sekundärluft mit dem Abgasstrom des Verbrennungsmotors 10 vermischen.

Das Sekundärluftsystem 40 umfasst eine Sekundärluftpumpe 42, welche über eine Sekundärluftleitung 46 mit einer Einleitstelle des Sekundärluftsystems 40 am Abgaskanal 22 des Verbrennungsmotors 10 verbunden ist. In der Sekundärluftleitung 46 oder an der Einleitstelle ist ein Sekundärluftventil 44 angeordnet, mit welchem die in den Abgaskanal eingeblasene Sekundärluftmenge steuerbar ist.

An dem Abgaskanal 22 ist stromaufwärts des motornahen Drei-Wege-Katalysators 28 eine erste Lambdasonde 48 angeordnet, welche vorzugsweise als Breitbandsonde ausgeführt ist. Stromabwärts des motornahen Drei-Wege-Katalysators 28 und stromaufwärts des Kraftstoffinjektors 38 sowie stromaufwärts der Einleitstelle des Sekundärluftsystems ist eine zweite Lambdasonde 50 angeordnet, welche vorzugsweise als Sprungsonde ausgeführt ist. Stromabwärts des Kraftstoffinjektors 38 sowie stromabwärts der Einleitstelle des Sekundärluftsystems 40 und stromaufwärts des Vier-Wege-Katalysators 32 ist eine dritte Lambdasonde 52 angeordnet, welche als Sprungsonde oder als Breitbandsonde ausgeführt ist. Der Verbrennungsmotor 10 ist über ein Steuergerät 60 steuerbar, welches die in die Brennräume eingespritzte Kraftstoffmenge regelt. Das Steuergerät 60 ist über Signalleitungen mit den Lambdasonden 48, 50, 52 verbunden, um ein emissionsoptimales Verbrennungsluftverhältnis in den Brennräumen des Verbrennungsmotors 10 einzuregeln.

In Figur 2 ist ein alternatives Ausführungsbeispiel für ein erfindungsgemäßes Abgasnachbehandlungssystem dargestellt. Bei im Wesentlichen gleichem Aufbau wie zu Figur 1 ausgeführt, ist in diesem Ausführungsbeispiel der zweite Katalysator 30 als zweiter Drei-Wege-Katalysator 34 ausgeführt. Dem zweiten Drei-Wege-Katalysator 34 ist ein vorzugsweise unbeschichteter Partikelfilter 36 nachgeschaltet, um die Partikelemissionen des Verbrennungsmotors 10 zurückzuhalten.

Der Verbrennungsmotor 10 wird mit einem stöchiometrischen Verbrennungsluftverhältnis (λ = 1) betrieben, wobei die gasförmigen Schadstoffkomponenten durch den motornahen Drei-Wege-Katalysator 28 konvertiert werden. Dabei wird eine Rußbeladung des Vier-Wege-Katalysators 32 oder des Partikelfilters 36 beispielsweise durch eine Modellbildung oder eine Differenzdruckmessung über den Vier-Wege-Katalysator 32 oder den Partikelfilter 36 ermittelt. Überschreitet der Vier-Wege-Katalysator 32 oder der Partikelfilter 36 einen definierten Beladungszustand, wird eine Regeneration des Vier-Wege-Katalysators 32 oder des Partikelfilters 36 eingeleitet.

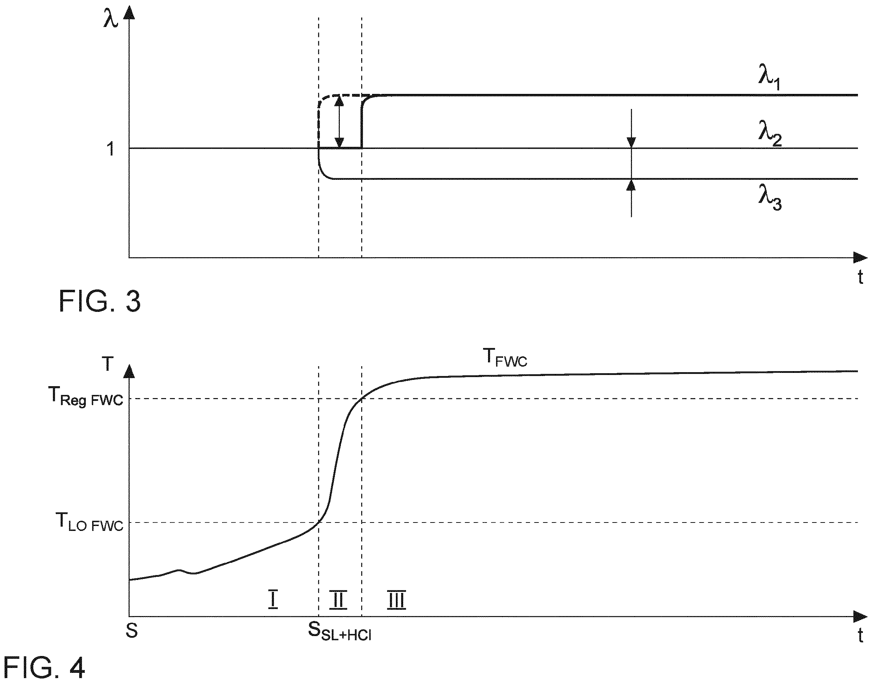

In Figur 3 ist der Verlauf des Verbrennungsluftverhältnisses im zeitlichen Verlauf während der Durchführung eines erfindungsgemäßen Verfahrens zur Abgasnachbehandlung des Verbrennungsmotors 10 dargestellt. Das Verfahren umfasst ab dem Start S des Verfahrens eine Vorheizphase I, in welcher der Abgasstrom des Verbrennungsmotor 10 durch innermotorische Heizmaßnahmen, wie eine Zündwinkelverstellung in Richtung spät, aufgeheizt wird, um den Vier-Wege-Katalysator 32 oder den zweiten Drei-Wege-Katalysator 34 auf seine Light-Off-Temperatur zu erwärmen. Hat der Vier-Wege-Katalysator 32 oder der zweite Drei-Wege-Katalysator 34 seine Light-Off-Temperatur erreicht, wird in einer Heizphase II gleichzeitig die Sekundärlufteinblasung sowie die Kraftstoffeinspritzung in den Abgaskanal 22 aktiviert. Der Verbrennungsmotor 10 wird weiterhin stöchiometrisch betrieben. Durch die eingeblasene Sekundärluft steht Sauerstoff zur Verfügung, um den eingespritzten Kraftstoff auf der katalytisch wirksamen Oberfläche des Vier-Wege-Katalysators 32 oder des zweiten Drei-Wege-Katalysators 34 exotherm umzusetzen. Während der Heizphase II wird das Mischlambda stromauf des Vier-Wege-Katalysators 32 oder des Drei-Wege-Katalysators 34 stöchiometrisch oder mager (bis zum Beispiel λ = 1,1) eingestellt. Die Heizphase II läuft so lange, bis die Regenerationstemperatur T_{reg} auf dem Vier-Wege-Katalysator 32 oder dem Partikelfilter 36 erreicht ist. Die Lambdaregelung erfolgt durch die dritte Lambdasonde 52 stromaufwärts des Vier-Wege-Katalysators 32 oder des zweiten Drei-Wege-Katalysators 34. In einer darauffolgenden Regenerationsphase III bleiben die Sekundärlufteinblasung durch das Sekundärluftsystem 40 sowie die Kraftstoffeinspritzung durch den Kraftstoffinjektor 38 aktiv. Das Mischlambda stromauf des Vier-Wege-Katalysators 32 oder des zweiten Drei-Wege-Katalysators 34 wird während der Regenerationsphase III überstöchiometrisch eingestellt (λ = 1,05 - 1,1), um den Sauerstoff für die Rußoxidation zur Verfügung zu stellen. Die Regenerationsphase III wird so lange aufrechterhalten, bis eine untere Rußbeladungsschwelle erkannt wird. Dies kann über ein Modell oder zum Beispiel durch eine Gegendruckmessung oder Differenzdruckmessung erfolgen.

In Figur 4 ist der Temperaturverlauf der Partikelminderungsvorrichtung 32, 36 während der Durchführung eines erfindungsgemäßen Verfahrens zur Abgasnachbehandlung dargestellt.

### Bezugszeichenliste

- 10: Verbrennungsmotor
- 12: Brennraum
- 14: Kraftstoffinjektor
- 16: Zündkerze
- 18: Auslass

- 20: Abgasanlage
- 22: Abgaskanal
- 24: Abgasturbolader
- 26: Turbine
- 28: Drei-Wege-Katalysator

- 30: zweiter Katalysator
- 32: Vier-Wege-Katalysator
- 34: zweiter Drei-Wege-Katalysator
- 36: Partikelfilter
- 38: Kraftstoffinjektor

- 40: Sekundärluftsystem
- 42: Sekundärluftpumpe
- 44: Sekundärluftventil
- 46: Sekundärluftleitung
- 48: erste Lambdasonde / Breitbandsonde

- 50: zweite Lambdasonde / Sprungsonde
- 52: dritte Lambdasonde / Sprungsonde

- 60: Steuergerät

## Patentansprüche

1. Abgasnachbehandlungssystem für einen Verbrennungsmotor (10), mit einer Abgasanlage (20), in welcher in Strömungsrichtung eines Abgases des Verbrennungsmotors (10) durch einen Abgaskanal (22) der Abgasanlage (20) ein motornaher Drei-Wege-Katalysator (28) und stromabwärts des motornahen Drei-Wege-Katalysators (28) ein zweiter Katalysator (30, 32, 34) sowie eine Partikelminderungsvorrichtung (32, 36) angeordnet sind, wobei an dem Abgaskanal (22) ein Kraftstoffinjektor (38) angeordnet ist, mit welchem Kraftstoff stromabwärts des motornahen Drei-Wege-Katalysators (28) und stromaufwärts des zweiten Katalysators (30, 32, 34) eingespritzt werden kann, und wobei die Abgasanlage (20) ein Sekundärluftsystem (40) umfasst, mit welchem Sekundärluft stromabwärts des motornahen Drei-Wege-Katalysators (28) und stromaufwärts des zweiten Katalysators (30, 32, 34) in den Abgaskanal (22) eingeblasen werden kann, **dadurch gekennzeichnet, dass** der Kraftstoffinjektor (38) stromaufwärts einer Einleitstelle des Sekundärluftsystems (40) angeordnet ist, wobei stromabwärts des Kraftstoffinjektors (38) und stromabwärts der Einleitstelle des Sekundärluftsystems (40) und stromaufwärts des zweiten Katalysators (30, 32, 34) eine Mischstrecke mit einer Länge von mindestens 50 cm ausgebildet ist.

2. Abgasnachbehandlungssystem nach Anspruch 1, **dadurch gekennzeichnet, dass** der zweite Katalysator (30, 32, 34) und die Partikelminderungsvorrichtung (32, 36) in einem gemeinsamen Bauteil als Vier-Wege-Katalysator (32) zusammengefasst sind.

3. Abgasnachbehandlungssystem nach Anspruch 1, **dadurch gekennzeichnet, dass** die Partikelminderungsvorrichtung (32, 36) als Ottopartikelfilter (36) ausgeführt ist, welcher in Strömungsrichtung stromabwärts des zweiten Katalysators (30, 34) angeordnet ist.

4. Abgasnachbehandlungssystem nach Anspruch 3, **dadurch gekennzeichnet, dass** der Ottopartikelfilter (36) als unbeschichteter Partikelfilter ausgeführt ist.

5. Abgasnachbehandlungssystem nach einem der Ansprüche 1, 3 oder 4, **dadurch gekennzeichnet, dass** der zweite Katalysator (30, 34) als zweiter Drei-Wege-Katalysator (34) ausgeführt ist.

6. Abgasnachbehandlungssystem nach einem der Ansprüche 1 bis 5, **dadurch gekennzeichnet, dass** der zweite Katalysator (30, 32, 34) mindestens 75 cm vom motornahen Drei-Wege-Katalysator (28) beabstandet ist.

7. Abgasnachbehandlungssystem nach einem der Ansprüche 1 bis 6, **dadurch gekennzeichnet, dass** in der Abgasanlage (20) drei Lambdasonden (48, 50, 52) angeordnet sind, wobei die erste Lambdasonde (48) stromaufwärts des motornahen Drei-Wege-Katalysators (28) angeordnet ist, wobei die zweite Lambdasonde (50) stromabwärts des motornahen Drei-Wege-Katalysators (28) und stromaufwärts des Kraftstoffinjektors (38) sowie der Einleitstelle des Sekundärluftsystems (40) angeordnet ist, und wobei die dritte Lambdasonde stromabwärts des Kraftstoffinjektors (38) und stromabwärts der Einleitstelle des Sekundärluftsystems (40) und stromaufwärts des zweiten Katalysators (30, 32, 34) angeordnet ist.

8. Abgasnachbehandlungssystem nach Anspruch 7, **dadurch gekennzeichnet, dass** die erste Lambdasonde (48) als Breitbandsonde und die zweite und dritte Lambdasonde (50, 52) als Sprungsonden ausgeführt sind.

9. Verfahren zur Abgasnachbehandlung eines Verbrennungsmotors (10) mit einem Abgasnachbehandlungssystem nach einem der Ansprüche 1 bis 8, umfassend folgende Schritte:
- Ermitteln einer Rußbeladung auf der Partikelminderungsvorrichtung (32, 36),
- Aufheizen der Abgasanlage (20) durch innermotorische Heizmaßnahmen, bis der zweite Katalysator (30, 32, 34) seine Light-Off-Temperatur (T_{LO}) erreicht hat,
- gleichzeitiges Einspritzen von Kraftstoff durch den Kraftstoffinjektor (36) und Einblasen von Sekundärluft in den Abgaskanal (22) stromabwärts des motornahen Drei-Wege-Katalysators (28) und stromaufwärts des zweiten Katalysators (30, 32, 34), wobei
- der eingespritzte Kraftstoff mit der Sekundärluft exotherm auf der katalytisch wirksamen Oberfläche des zweiten Katalysators (30, 32, 34) umgesetzt wird, bis die Partikelminderungsvorrichtung (32, 36) ihre Regenerationstemperatur (T_{reg}) erreicht hat, und
- Oxidieren der in der Partikelminderungsvorrichtung (32, 36) zurückgehaltenen Rußpartikel, wobei der Sauerstoff zur Oxidation der Rußpartikel durch das Sekundärluftsystem (40) bereitgestellt wird.

10. Verfahren nach Anspruch 9, **dadurch gekennzeichnet, dass** der Verbrennungsmotor (10) während der Durchführung des Verfahrens mit einem stöchiometrischen Verbrennungsluftverhältnis (λ = 1) betrieben wird.

11. Verfahren nach Anspruch 9 oder 10, **dadurch gekennzeichnet, dass** während einer Heizphase der Partikelminderungsvorrichtung (32, 36) stromabwärts des motornahen Drei-Wege-Katalysators (28) ein stöchiometrisches oder leicht überstöchiometrisches Verbrennungsluftverhältnis über den Kraftstoffinjektor (38) und das Sekundärluftsystem (40) eingestellt wird.

12. Verfahren nach einem der Ansprüche 9 bis 11, **dadurch gekennzeichnet, dass** während der Regeneration der Partikelminderungsvorrichtung (32, 36) weiterhin Kraftstoff in den Abgaskanal (22) stromabwärts des motornahen Drei-Wege-Katalysators (28) eingespritzt wird.

13. Verfahren nach einem der Ansprüche 9 bis 12, **dadurch gekennzeichnet, dass** während der Heizphase der Partikelminderungsvorrichtung (32, 36) und/oder während der Regeneration der Partikelminderungsvorrichtung (32, 36) die innermotorischen Heizmaßnahmen aufrechterhalten bleiben.

## Claims

1. Exhaust-gas aftertreatment system for an internal combustion engine (10), having an exhaust-gas system (20) in which, in a flow direction of an exhaust gas of the internal combustion engine (10) through an exhaust-gas channel (22) of the exhaust-gas system (20), there are arranged a close-coupled three-way catalytic converter (28) and, downstream of the close-coupled three-way catalytic converter (28), a second catalytic converter (30, 32, 34) and also a particle-reduction device (32, 36), wherein, on the exhaust-gas channel (22), there is arranged a fuel injector (38) by way of which fuel can be injected downstream of the close-coupled three-way catalytic converter (28) and upstream of the second catalytic converter (30, 32, 34), and wherein the exhaust-gas system (20) comprises a secondary-air system (40) by way of which secondary air can be blown into the exhaust-gas channel (22) downstream of the close-coupled three-way catalytic converter (28) and upstream of the second catalytic converter (30, 32, 34), **characterized in that** the fuel injector (38) is arranged upstream of an introduction point of the secondary-air system (40), wherein a mixing path with a length of at least 50 cm is formed downstream of the fuel injector (38) and downstream of an introduction point of the secondary-air system (40) and upstream of the second catalytic converter (30, 32, 34) .

2. Exhaust-gas aftertreatment system according to Claim 1, **characterized in that** the second catalytic converter (30, 32, 34) and the particle-reduction device (32, 36) are combined in a common component as a four-way catalytic converter (32).

3. Exhaust-gas aftertreatment system according to Claim 1, **characterized in that** the particle-reduction device (32, 36) is designed as a petrol-engine particle filter (36), which is arranged downstream of the second catalytic converter (30, 34) in the flow direction.

4. Exhaust-gas aftertreatment system according to Claim 3, **characterized in that** the petrol-engine particle filter (36) is designed as an uncoated particle filter.

5. Exhaust-gas aftertreatment system according to one of Claims 1, 3 and 4, **characterized in that** the second catalytic converter (30, 34) is designed as a second three-way catalytic converter (34).

6. Exhaust-gas aftertreatment system according to one of Claims 1 to 5, **characterized in that** the second catalytic converter (30, 32, 34) is space apart from the close-coupled three-way catalytic converter (28) by at least 75 cm.

7. Exhaust-gas aftertreatment system according to one of Claims 1 to 6, **characterized in that** three lambda probes (48, 50, 52) are arranged in the exhaust-gas system (20), wherein the first lambda probe (48) is arranged upstream of the close-coupled three-way catalytic converter (28), wherein the second lambda probe (50) is arranged downstream of the close-coupled three-way catalytic converter (28) and upstream of the fuel injector (38) and of the introduction point of the secondary-air system (40), and wherein the third lambda probe is arranged downstream of the fuel injector (38) and downstream of the introduction point of the secondary-air system (40) and upstream of the second catalytic converter (30, 32, 34).

8. Exhaust-gas aftertreatment system according to Claim 7, **characterized in that** the first lambda probe (48) is designed as a broadband probe and the second and third lambda probes (50, 52) are designed as step-type probes.

9. Method for exhaust-gas aftertreatment of an internal combustion engine (10) by way of an exhaust-gas aftertreatment system according to one of Claims 1 to 8, comprising the following steps:
- determining a soot loading on the particle-reduction device (32, 36),
- heating up the exhaust-gas system (20) by way of engine-internal heating measures until the second catalytic converter (30, 32, 34) has reached its light-off temperature (T_{LO}),
- simultaneously injecting fuel by way of the fuel injector (36) and blowing secondary air into the exhaust-gas channel (22) downstream of the close-coupled three-way catalytic converter (28) and upstream of the second catalytic converter (30, 32, 34), wherein
- the injected fuel is exothermically converted on the catalytically active surface of the second catalytic converter (30, 32, 34) with the secondary air until the particle-reduction device (32, 36) has reached its regeneration temperature (T_{reg}), and
- oxidizing the soot particles retained in the particle-reduction device (32, 36), wherein the oxygen for oxidizing the soot particles is provided by the secondary-air system (40).

10. Method according to Claim 9, **characterized in that** the internal combustion engine (10) is operated with a stoichiometric combustion air ratio (λ=1) while the method is being carried out.

11. Method according to Claim 9 or 10, **characterized in that**, during a heating phase of the particle-reduction device (32, 36), downstream of the close-coupled three-way catalytic converter (28), a stoichiometric or slightly superstoichiometric combustion air ratio is set via the fuel injector (38) and the secondary-air system (40).

12. Method according to one of Claims 9 to 11, **characterized in that**, during the regeneration of the particle-reduction device (32, 36), fuels continues to be injected into the exhaust-gas channel (22) downstream of the close-coupled three-way catalytic converter (28).

13. Method according to one of Claims 9 to 12, **characterized in that**, during the heating phase of the particle-reduction device (32, 36) and/or during the regeneration of the particle-reduction device (32, 36), the engine-internal heating measures are maintained.

## Revendications

1. Système de post-traitement de gaz d'échappement destiné à un moteur à combustion interne (10), ledit système comprenant une installation de gaz d'échappement (20) dans laquelle sont disposés un convertisseur catalytique à trois voies (28) proche du moteur et, en aval du convertisseur catalytique à trois voies (28) proche du moteur, un deuxième convertisseur catalytique (30, 32, 34) et un dispositif de réduction de particules (32, 36) dans le sens d'écoulement d'un gaz d'échappement du moteur à combustion interne (10) à travers un conduit de gaz d'échappement (22) de l'installation de gaz d'échappement (20), un injecteur de carburant (38), qui permet d'injecter du carburant en aval du convertisseur catalytique à trois voies (28) proche du moteur et en amont du deuxième convertisseur catalytique (30, 32, 34), étant disposé au niveau de la conduite de gaz d'échappement (22), et l'installation de gaz d'échappement (20) comprenant un système d'air secondaire (40) qui permet de souffler de l'air secondaire dans la conduite de gaz d'échappement (22) en aval du convertisseur catalytique à trois voies (28) proche du moteur et en amont du deuxième convertisseur catalytique (30, 32, 34), **caractérisé en ce que** l'injecteur de carburant (38) est disposé en amont d'un point d'entrée du système d'air secondaire (40), une section de mélange d'une longueur d'au moins 50 cm étant conçue en aval de l'injecteur de carburant (38) et en aval du point d'entrée du système d'air secondaire (40) et en amont du deuxième convertisseur catalytique (30, 32, 34).

2. Système de post-traitement de gaz d'échappement selon la revendication 1, **caractérisé en ce que** le deuxième convertisseur catalytique (30, 32, 34) et le dispositif de réduction de particules (32, 36) sont réunis dans un composant commun se présentant sous la forme d'un convertisseur catalytique à quatre voies (32) .

3. Système de post-traitement de gaz d'échappement selon la revendication 1, **caractérisé en ce que** le dispositif de réduction de particules (32, 36) est conçu comme un filtre à particules Otto (36) qui est disposé en aval du deuxième convertisseur catalytique (30, 34) dans le sens d'écoulement.

4. Système de post-traitement de gaz d'échappement selon la revendication 3, **caractérisé en ce que** le filtre à particules Otto (36) est réalisé sous la forme d'un filtre à particules sans revêtement.

5. Système de post-traitement de gaz d'échappement selon l'une des revendications 1, 3 ou 4, **caractérisé en ce que** le deuxième convertisseur catalytique (30, 34) est réalisé sous la forme d'un deuxième convertisseur catalytique à trois voies (34).

6. Système de post-traitement de gaz d'échappement selon l'une des revendications 1 à 5, **caractérisé en ce que** le deuxième convertisseur catalytique (30, 32, 34) est distant d'au moins 75 cm du convertisseur catalytique à trois voies (28) proche du moteur.

7. Système de post-traitement de gaz d'échappement selon l'une des revendications 1 à 6, **caractérisé en ce que** trois sondes lambda (48, 50, 52) sont disposées dans l'installation de gaz d'échappement (20), la première sonde lambda (48) étant disposée en amont du convertisseur catalytique à trois voies (28) proche du moteur, la deuxième sonde lambda (50) étant disposée en aval du convertisseur catalytique à trois voies (28) proche du moteur et en amont de l'injecteur de carburant (38) et du point d'entrée du système d'air secondaire (40), et la troisième sonde lambda étant disposée en aval de l'injecteur de carburant (38) et en aval du point d'entrée du système d'air secondaire (40) et en amont du deuxième convertisseur catalytique (30, 32, 34) .

8. Système de post-traitement de gaz d'échappement selon la revendication 7, **caractérisé en ce que** la première sonde lambda (48) est conçue comme une sonde à large bande et les deuxième et troisième sondes lambda (50, 52) sont conçues comme des sondes à saut.

9. Procédé de post-traitement de gaz d'échappement d'un moteur à combustion interne (10) pourvu d'un système de post-traitement de gaz d'échappement selon l'une des revendications 1 à 8, ledit procédé comprenant les étapes suivantes :
- déterminer une charge de suie sur le dispositif de réduction de particules (32, 36),
- chauffer l'installation de gaz d'échappement (20) par des mesures de chauffage internes au moteur jusqu'à ce que le deuxième convertisseur catalytique (30, 32, 34) ait atteint sa température d'allumage (T_{LO}),
- injecter simultanément du carburant par le biais de l'injecteur de carburant (36) et souffler de l'air secondaire dans la conduite de gaz d'échappement (22) en aval du convertisseur catalytique à trois voies (28) proche du moteur et en amont du deuxième convertisseur catalytique (30, 32, 34),
- le carburant injecté étant soumis à une réaction exothermique avec l'air secondaire sur la surface catalytiquement active du deuxième convertisseur catalytique (30, 32, 34) jusqu'à ce que le dispositif de réduction de particules (32, 36) ait atteint sa température de régénération (T_{reg}), et
- oxyder les particules de suie retenues dans le dispositif de réduction de particules (32, 36), l'oxygène destiné à oxyder les particules de suie étant fourni par le système d'air secondaire (40).

10. Procédé selon la revendication 9, **caractérisé en ce que** le moteur à combustion interne (10) fonctionne avec un taux d'air de combustion stœchiométrique (λ = 1) lors de la mise en œuvre du procédé.

11. Procédé selon la revendication 9 ou 10, **caractérisé en ce que**, lors d'une phase de chauffage du dispositif de réduction de particules (32, 36) en aval du convertisseur catalytique à trois voies (28) proche du moteur, un rapport d'air de combustion stœchiométrique ou légèrement sur-stœchiométrique est réglé par le biais de l'injecteur de carburant (38) et du système d'air secondaire (40).

12. Procédé selon l'une des revendications 9 à 11, **caractérisé en ce que**, lors de la régénération du dispositif de réduction de particules (32, 36), du carburant est en outre injecté dans le canal de gaz d'échappement (22) en aval du convertisseur catalytique à trois voies (28) proche du moteur.

13. Procédé selon l'une des revendications 9 à 12, **caractérisé en ce que**, lors de la phase de chauffage du dispositif de réduction de particules (32, 36) et/ou lors de la régénération du dispositif de réduction de particules (32, 36), les mesures de chauffage internes au moteur sont maintenues.
